# EUROPÄISCHE PATENTANMELDUNG

(11) **EP 1 174 433 A2**
(43) Veröffentlichungstag der Anmeldung: **23.01.2002**
(21) Anmeldenummer: 01116645.1
(22) Anmeldetag: 13.07.2001
(51) Int. Cl.: C07F 7/18, C07F 7/14

(54) **Verfahren zur Herstellung von Vinylsilanen**

(30) Priorität: 18.07.2000 DE 10034894
(71) Anmelder: BASF AKTIENGESELLSCHAFT, 67056 Ludwigshafen (DE)
(72) Erfinder: Preiss, Thomas, Dr., 67256 Weisenheim am Sand (DE); Friedrich, Holger, Dr., 67240 Bobenheim-Roxheim (DE); Henkelmann, Jochem, Dr., 68165 Mannheim (DE)
(74) Vertreter: Isenbruck, Günter, Dr.

(57) **Zusammenfassung**

In dem Verfahren zur Herstellung von Vinylsilanen durch Umsetzung von acetylenischen Kohlenwasserstoffen mit Silanen, die mindestens ein Siliziumgebundenes Wasserstoffatom aufweisen, in flüssiger Phase in Anwesenheit eines Katalysators wird das Silan zu der flüssigen Phase zugegeben. Insbesondere erfolgt die Umsetzung bei erhöhtem Druck, und während der Umsetzung wird der verbrauchte acetylenische Kohlenwasserstoff unter Aufrechterhaltung eines während der gesamten Umsetzung konstanten Drucks nachgeführt.

## Beschreibung

Die Erfindung betrifft ein Verfahren zur Herstellung von Vinylsilanen.

Vinylsilane sind technisch wertvolle Produkte, die beispielsweise als Haftvermittler und als Comonomere in feuchtigkeitshärtenden Polyolefinen eingesetzt werden.

Die Synthese von Vinylsilanen durch Umsetzung von acetylenischen Kohlenwasserstoffen mit Silizium-Verbindungen, die mindestens ein Wasserstoffatom enthalten (Hydrosilylierung), ist literaturbekannt.

Die Ausbeuten an den gewünschten Vinylsilanen sind jedoch in den literaturbekannten Verfahren häufig mäßig, da bei der Umsetzung unerwünschte Nebenprodukte entstehen, insbesondere Koppelprodukte, die durch weitere Hydrosilylierung der gewünschten Vinylsilane gebildet werden.

US 2,823,218 betrifft ein Verfahren zur Umsetzung von Silizium-Verbindungen, die eine Silizium-Wasserstoff-Bindung aufweisen, mit aliphatisch ungesättigten Verbindungen, wobei verbesserte Ausbeuten der entsprechenden Produkte und verringerte Ausbeuten der Nebenprodukte bei niedrigen Reaktionstemperaturen erhalten werden. Die Umsetzung erfolgt durch Zugabe einer Mischung aus einer Silizium-Verbindung und einem aliphatisch ungesättigten Kohlenwasserstoff zu einem inerten Lösungsmittel, enthaltend Chloroplatinsäure als Katalysator. In Beispiel 21 ist die Umsetzung von Acetylen mit Triacetoxysilan offenbart. Dabei wird Acetylen zu einer Mischung aus Triacetoxysilan und Chloroplatinsäure in Isopropanol zugegeben. Als Produkt wird Vinyltriacetoxysilan erhalten. Es ist jedoch keine Ausbeute angegeben.

US 2,637,738 betrifft die Umsetzung von Silanen mit ungesättigten aliphatischen Verbindungen wie Acetylen und Ethylen. Dabei werden der Katalysator, Platin auf Aktivkohle, und das entsprechende Silan vorgelegt und mit Acetylen bzw. Ethylen, bevorzugt unter Druck, umgesetzt. Gemäß Tabelle 1, worin die Ergebnisse der Untersuchung der Umsetzung von Acetylen mit Trichlorsilan dargestellt sind, werden bei Einsatz von 5% Platin auf gepulverter Aktivkohle als Katalysator 75% der gewünschten Vinylverbindung und 25% des unerwünschten Koppelproduktes erhalten.

US 5,565,596 betrifft die Umsetzung von Silanen, insbesondere Di- oder Trichlorsilanen, mit Alkinen an einem Platin-Katalysator. Zur Reduktion der Bildung bissilylierter Addukte der Alkine wird ein Katalysatormodifier zugegeben. Die Umsetzung erfolgt durch Zugabe des Silans in einer Mischung mit dem Alkin zu einem inerten Lösungsmittel, enthaltend den Platin-Katalysator und den Katalysatormodifier. In den Beispielen ist das Gewichtsverhältnis zwischen dem gewünschten Vinylsilan und bissilylilierten Derivaten angegeben. Eine Angabe der absoluten Ausbeute an dem gewünschten Vinylsilan ist in den Beispielen nicht angegeben.

EP-A 0 409 141 betrifft die Herstellung von Alkenylsilanen durch Umsetzung eines gasförmigen acetylenischen Kohlenwasserstoffs mit einem gasförmigen Silan, das eine Silizium-Wasserstoff-Bindung aufweist in Anwesenheit eines Hydrosilylierungskatalysators. Dabei soll die Ausbeute an gewünschtem Alkenylsilan maximiert und die Ausbeute an unerwünschten Nebenprodukten minimiert werden. Gleichzeitig sollen die Gefahren, die bei der Arbeit mit gasförmigen acetylenischen Kohlenwasserstoffen auftreten, vermindert werden. Die Umsetzung erfolgt durch Zufuhr einer gasförmigem Mischung, enthaltend einen acetylenischen Kohlenwasserstoff und ein Silan zu einem Reaktionsmedium in Form eines dünnen, beweglichen Flüssigkeitsfilms. Dieser Flüssigkeitsfilm enthält das während der Umsetzung hergestellte gewünschte Alkenylsilan und einen gelösten Hydrosilylierungs-Katalysator sowie gegebenenfalls ein organisches Lösungsmittel. Das Verhältnis des acetylenischen Kohlenwasserstoffs zu dem Silan ist >1 und der Reaktionsdruck liegt im Bereich von Atmosphärendruck bis 2 atm. In Tabelle 1 sind die Verhältnisse von gewünschtem Vinylsilan zu unerwünschtem Koppelprodukt aufgeführt. Eine absolute Ausbeute an Vinylsilan wird jedoch nicht angegeben.

Aus dem Stand der Technik ist somit die Problematik der Bildung von Koppelprodukten bei der Umsetzung von Silanen, die mindestens eine Silizium-Wasserstoff-Bindung aufweisen mit acetylenischen Kohlenwasserstoffen bekannt. Gemäß dem Stand der Technik erfolgt die Umsetzung entweder durch Zugabe einer Mischung aus Silan und ungesättigtem Kohlenwasserstoff zu einer einen Katalysator enthaltenden Lösung oder durch Zugabe von einem gasförmigen acetylenischen Kohlenwasserstoff zu einer Mischung aus Silan, Katalysator und gegebenenfalls Lösungsmittel.

Aufgabe der vorliegenden Erfindung ist die Bereitstellung eines Verfahrens zur Herstellung von Vinylsilanen, wobei ein möglichst hoher Umsatz mit hohen Selektivitäten in Verbindung mit einer möglichst hohen Raum-Zeit-Ausbeute erreicht werden soll.

Die Lösung der Aufgabe geht aus von einem Verfahren zur Herstellung von Vinylsilanen durch Umsetzung von acetylenischen Kohlenwasserstoffen mit Silanen, die mindestens ein Silizium-gebundenes Wasserstoffatom aufweisen, in flüssiger Phase in Anwesenheit eines Katalysators.

Das erfindungsgemäße Verfahren ist dann dadurch gekennzeichnet, daß das Silan zu der flüssigen Phase, enthaltend den acetylenischen Kohlenwasserstoff und den Katalysator zugegeben wird.

Dieses Verfahren unterscheidet von den aus dem Stand der Technik bereits bekannten Verfahren dadurch, daß das Silan zu einer Mischung aus acetylenischem Kohlenwasserstoff und Katalysator gegeben wird. Bedingt durch die kontrollierte Zugabe des Silans ist eine exakte Temperaturführung im Reaktor gewährleistet. Des weiteren kann so ein lokaler Überschuß von Silan verhindert und Koppelprodukte vermieden werden.

Bevorzugt wird ein acetylenischer Kohlenwasserstoff der allgemeinen Formel R¹C≡CH eingesetzt, worin R¹ ein Alkylrest mit 1 bis 4 Kohlenstoffatomen oder Wasserstoff ist. Bevorzugt wird somit ein gasförmiger acetylenischer Kohlenwasserstoff eingesetzt. Besonders bevorzugt ist der gasförmige acetylenische Kohlenwasserstoff Acetylen (R¹ = H).

Bevorzugte Silane sind solche der allgemeinen Formel HSiR²ₙX₃₋ₙ, worin R² ein Alkylrest oder ein halogenierter Alkylrest, X ein Halogenid oder ein Alkoxyrest und n = 0 bis 3 ist. Bevorzugt ist R² ein Alkylrest oder ein halogenierter Alkylrest mit 1 bis 6 Kohlenstoffatomen, besonders bevorzugt mit 1 bis 3 Kohlenstoffatomen. X ist bevorzugt Chlorid oder ein Alkoxyrest OR³, worin R³ Alkyl oder Aryl kann. Bevorzugt ist R³ ein C₁ bis C₆ -Alkyl- oder ein C₆ bis C₁₂ -Arylrest. Besonders bevorzugt ist R³ ein C₁ bis C₃ -Alkylrest, ganz besonders bevorzugt ist R³ Methyl. Wenn X ein Halogenid ist, ist n bevorzugt 0 bis 2. Wenn X ein Alkoxyrest ist, ist n ist bevorzugt 0 bis 1, besonders bevorzugt ist n = 0. Ganz besonders bevorzugt werden demnach Trialkoxysilane der allgemeinen Formel 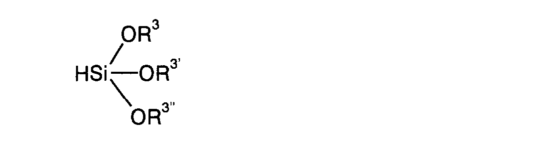 eingesetzt,
worin R³, R^{3'}, R^{3"} unabhängig voneinander die für R³ die genannte Bedeutung haben.

In einer bevorzugten Ausführungsform wird das erfindungsgemäße Verfahren bei erhöhtem Druck durchgeführt. Dabei beträgt der Druck im allgemeinen von 5 bis 30 bar, bevorzugt von 15 bis 25, besonders bevorzugt von 15 bis 20 bar. Bevorzugt wird die Reaktion bei konstantem Druck durchgeführt, wobei der gasförmige acetylenische Kohlenwasserstoff gemäß seinem Verbrauch nachgeführt wird, so daß ein konstanter Druck aufrechterhalten wird.

Der in dem erfindungsgemäßen Verfahren eingesetzte Katalysator ist bevorzugt ein homogen gelöster Katalysator. Als Katalysatoren sind dabei Katalysatoren ausgewählt aus Pt- oder Pd-Katalysatoren geeignet. Besonders bevorzugt wird ein homogen gelöster Platin-Kataysator eingesetzt. Ganz besonders bevorzugt wird ein Katalysator der allgemeinen Formel Pt(0)Lₘ eingesetzt, worin m = 2 bis 4 ist und L ein beliebiger geeigneter Ligand, beispielsweise Tetramethyldivinyldisiloxan. Ganz besonders bevorzugt wird Tetramethyl-divinyldisiloxanplatin als Katalysator eingesetzt. Durch das Arbeiten unter Druck in einer homogenkatalysierten Reaktion können hohe Raum-Zeit-Ausbeuten erreicht werden, die im allgemeinen, in Abhängigkeit von dem entsprechenden Produkt, im Bereich von 50 bis 2000 ^{g}/₁ₕ, liegen.

Der homogene Katalysator wird im allgemeinen in einer Konzentration zwischen 1 und 1000 ppm, bezogen auf das eingesetzte Silan, bevorzugt zwischen 1 und 100 ppm, besonders bevorzugt zwischen 1 und 40 ppm eingesetzt.

Vorzugsweise erfolgt die Umsetzung in einem inerten hochsiedenden Lösungsmittel, ausgewählt aus aliphatischen und aromatischen Kohlenwasserstoffen und Gemischen verschiedener Kohlenwasserstoffe und hochsiedenden Estern und Ethern. Besonders bevorzugt sind hochsiedende aromatische Kohlenwasserstoffe wie Xylol.

In einer bevorzugten Ausführungsform des erfindungsgemäßen Verfahrens wird ein Silan mit einem gasförmigen acetylenischen Kohlenwasserstoff, bevorzugt Acetylen, umgesetzt. Dabei wird ein inertes hochsiedendes Lösungsmittel, zum Beispiel Xylol, vorgelegt, in dem ein Platin-Katalysator homogen gelöst ist. Der gasförmige acetylenische Kohlenwasserstoff wird zugegeben, bis ein Druck von 20 bar (18 bar Partialdruck des acetylenischen Kohlenwasserstoffs) erreicht ist. Anschließend wird das umzusetzende Silan zugepumpt. Die Dauer, in der das Silan zugepumpt wird, ist abhängig von der Ansatzgröße und der Reaktorgeometrie. Der gasförmige acetylenische Kohlenwasserstoff wird bei dieser Reaktion gemäß seinem Verbrauch so-nachgeführt, daß die Reaktion bei konstantem Druck durchgeführt wird.

Die Hydrosilylierung von acetylenischen Kohlenwasserstoffen kann so unter schonenden Reaktionsbedingungen bei niedrigen Temperaturen durchgeführt werden. Im allgemeinen sind Temperaturen von 0°C bis 80°C, bevorzugt von 0°C bis 60°C, besonders bevorzugt von 0°C bis 40°C üblich.

Bevorzugt wird das erfindungsgemäße Verfahren so durchgeführt, das die Temperaturschwankung im Reaktor während der Reaktion nach Aufheizen auf die Reaktionstemperatur im allgemeinen maximal 10°C, bevorzugt maximal 5°C, besonders bevorzugt maximal 2°C beträgt.

Durch diese Verfahrensweise werden hohe Selektivitäten von im allgemeinen 90 bis > 99% erreicht, bevorzugt von 95 bis > 99%, besonders bevorzugt von 98 bis > 99%. Unerwünschte Neben- sowie Folgereaktionen werden durch diese Verfahrensweise vermieden bzw. unterdrückt.

Die Ausbeute an Vinylsilan liegt im allgemeinen bei 89 bis 99,9 %, bevorzugt bei 94 bis 99,5 %, bezogen auf das eingesetzte Silan.

Das erfindungsgemäße Verfahren kann in allen für diese Reaktion geeigneten Reaktoren durchgeführt werden. Bevorzugt wird das Verfahren in einem Rohr-, Rühr- oder Schlaufenreaktor durchgeführt. Besonders bevorzugt ist eine Umsetzung in einem Schlaufenreaktor.

Die nachfolgenden Beispiele erläutern die Erfindung zusätzlich.

### Beispiele:

### Vergleichsbeispiel:

In einem 2,5-1 Autoklaven wurden 600g Xylol, 200g Trimethoxysilan und 1g Tetramethyl-divinyldisiloxanplatin-Lösung in Xylol (150 ppm) vorgelegt. Der Reaktor wurde dann mit 2 bar Stickstoff inertisiert und unter Rühren auf 40°C aufgeheizt. Nach Erreichen der Reaktionstemperatur wurde mit Acetylen auf 20 bar aufgepresst. Innerhalb von einer Stunde stieg die Innentemperatur bis auf 50°C an und konnte dann durch Kühlen auf 40°C gesenkt werden. Nach 2 Stunden bei 20 bar wurde der Autoklav auf Raumtemperatur abgekühlt und entspannt. Im Reaktionsaustrag konnte kein Edukt mehr nachgewiesen werden. Die Ausbeute an Trimethoxyvinylsilan betrug 47,7 %. Als Nebenprodukt konnten 1,2―(Trimethoxy)ethylsilan und 1,1-(Trimethoxy)ethylsilan nachgewiesen werden.

### Beispiel (erfindungsgemäß):

In einem 2,5-1 Autoklaven wurden 647g Xylol und 0,1 g Tetramethyldivinyldisiloxanplatin-Lösung in Xylol (20 ppm) vorgelegt. Der Reaktor wurde dann mit 2 bar Stickstoff inertisiert und mit Acetylen auf 20 bar aufgepresst. Innerhalb von 30 Minuten wurden 140g Trimethoxysilan zugepumpt. Während dieser Zeit wurde der Reaktordruck mit Acetylen auf 20 bar gehalten. Nach 2 Stunden bei 20 bar und 40°C wird der Autoklav auf Raumtemperatur gekühlt und entspannt. Im Reaktionsaustrag konnte kein Edukt mehr nachgewiesen werden. Die Ausbeute an Trimethoxyvinylsilan betrug 99,3 %.

## Patentansprüche

1. Verfahren zur Herstellung von Vinylsilanen durch Umsetzung von acetylenischen Kohlenwasserstoffen mit Silanen, die mindestens ein Silizium-gebundenes Wasserstoffatom aufweisen, in flüssiger Phase in Anwesenheit eines Katalysators, **dadurch gekennzeichnet, daß** das Silan zu der flüssigen Phase, enthaltend den acetylenischen Kohlenwasserstoff und den Katalysator, zugegeben wird.

2. Verfahren nach Anspruch 1, **dadurch gekennzeichnet, daß** ein acetylenischer Kohlenwasserstoff der allgemeinen Formel R¹C≡CH eingesetzt wird, worin R¹ ein Alkylrest mit 1 bis 4 Kohlenstoffatomen oder Wasserstoff ist.

3. Verfahren nach Anspruch 2, **dadurch gekennzeichnet, daß** Acetylen (R¹ = H) eingesetzt wird.

4. Verfahren nach einem der Ansprüche 1 bis 3, **dadurch gekennzeichnet, daß** Silane der allgemeinen Formel HSiR²ₙX₃₋ₙ eingesetzt werden, worin R² ein Alkylrest oder ein halogenierter Alkylrest, X ein Halogenid oder Alkoxyrest und n = 0 bis 3 ist.

5. Verfahren nach Anspruch 4, **dadurch gekennzeichnet, daß** ein Silan der Formel 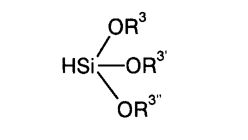 eingesetzt wird, worin R³, R^{3'} und R^{3"} unabhängig voneinander Alkyl, Aryl oder Alkenyl bedeuten.

6. Verfahren nach einem der Ansprüche 1 bis 5, **dadurch gekennzeichnet, daß** die Umsetzung bei erhöhtem Druck erfolgt.

7. Verfahren nach Anspruch 6, **dadurch gekennzeichnet, daß** der Druck 15 bis 25 bar beträgt.

8. Verfahren nach Anspruch 6 oder 7, **dadurch gekennzeichnet, daß** während der Umsetzung der verbrauchte acetylenische Kohlenwasserstoff unter Aufrechterhaltung eines während der gesamten Umsetzung konstanten Drucks nachgeführt wird.

9. Verfahren nach einem der Ansprüche 1 bis 8, **dadurch gekennzeichnet, daß** der Katalysator ein homogen gelöster Katalysator ist.

10. Verfahren nach Anspruch 9, **dadurch gekennzeichnet, daß** ein Katalysator der allgemeinen Formel Pt(0)Lₘ eingesetzt wird, worin m = 2 bis 4 ist und L ein beliebiger geeigneter Ligand.
